(19) Europäisches Patentamt
European Patent Office
Office européen des brevets

(11) EP 0 905 159 A1

(12) **EUROPÄISCHE PATENTANMELDUNG**

(43) Veröffentlichungstag:
**31.03.1999 Patentblatt 1999/13**

(51) Int. Cl.⁶: **C08G 18/36**, C08G 18/65, C08J 9/08, C08J 9/14, C08G 18/79

(21) Anmeldenummer: **98118030.0**

(22) Anmeldetag: **23.09.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.09.1997 DE 19742013**

(71) Anmelder:
**BASF AKTIENGESELLSCHAFT
67056 Ludwigshafen (DE)**

(72) Erfinder:
- **Heinz, Marion
02994 Bernsdorf (DE)**
- **Wiegmann, Werner
32369 Rahdem (DE)**
- **Rotermund, Udo, Dr.
01990 Ortrand (DE)**
- **Biedermann, Anja
01968 Senftenberg (DE)**
- **Reichelt, Michael
01945 Ruhland (DE)**

(54) **Offenzellige Hartschaumstoffe auf Isocyanatbasis**

(57) Verfahren zur Herstellung von offenzelligen Hartschaumstoffen durch Umsetzung von

a) Polyisocyanaten mit

b) gegenüber Isocyanaten reaktive Wasserstoffatome aufweisenden Verbindungen in Gegenwart von

c) Wasser,

d) gegebenenfalls als physikalische Blähmittel wirkende organische Verbindungen,

e) Katalysatoren, Hilfs- und/oder Zusatzstoffen,

dadurch gekennzeichnet, daß als reaktive Wasserstoffatome aufweisende Verbindungen Stoffe mit der Struktur I eingesetzt werden:

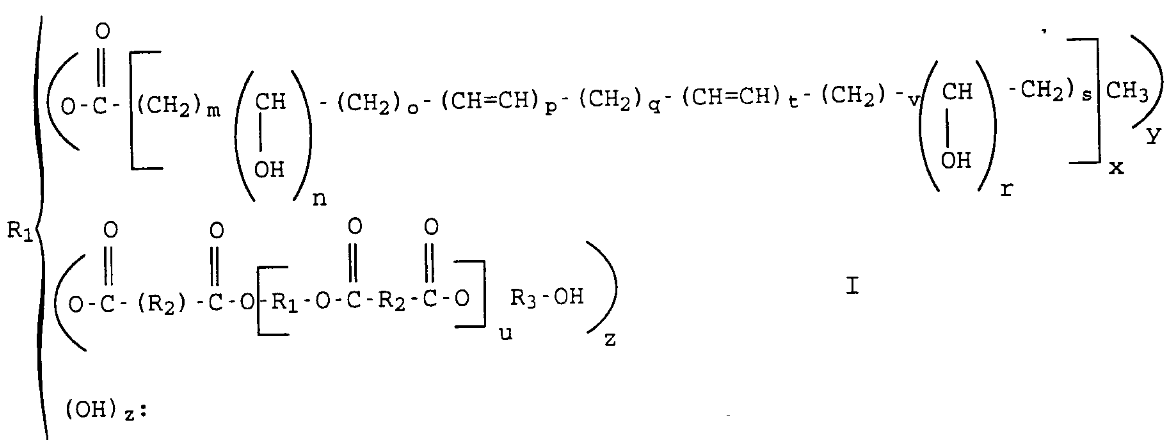

I

EP 0 905 159 A1

mit m von 0 - 15
n von 0 - 1
o von 0 - 15
p von 0 - 1
q von 0 - 15
r von 0 - 1
s von 0 - 15
t von 0 - 1
u von 0 - 10
v von 0 - 15
x von 1 - 5
y von 1 - 4 bzw. Mischungen zwischen 1 - 3 mit $r + n \neq 0$
z von 0 - 3
$z_i$ von 0,1 -3

$R_1$ eine aliphatische Struktur ohne OH-Gruppen, basierend auf der Struktur mehrwertiger Alkohole, vorzugsweise Ethylenglykol, Diethylenglykol, Triethylenglykol, 1,2-Propylenglykol und Dipropylenglykol, 1,4-Butandiol, 1,6-Hexandiol, Neopentylglykol, 1,3-Butandiol, Trimethylolpropan, Trimethylolethan, Glycerin, Pentaerythrit, wobei diese Stoffe auch im beliebigen Gemisch untereinander beim Verestern eingesetzt werden können und $R_1$ damit auch ein Gemisch der entsprechenden Strukturen bedeuten kann.

$R_2$ den Rest einer Polycarbonsäure ohne COOH-Gruppen, z.B. Adipinsäure, Terephthalsäure, o-Phthalsäure,

$R_3$ einen Alkoholrest wie $R_1$.

## Beschreibung

Die Erfindung betrifft offenzellige Hartschaumstoffe auf Isocyanatbasis, die insbesondere als Kernmaterial in Vakuumisolationseinheiten geeignet sind. Gegenstand der Erfindung sind weiterhin Hilfsstoffe zur Herstellung derartiger Hartschaumstoffe sowie die unter Verwendung dieser offenzelligen Polyurethanhartschaumstoffe hergestellten Vakuumisolationseinheiten.

Die Herstellung von Hartschaumstoffen auf Isocyanatbasis als Wärmeisolationsmaterial ist seit langem bekannt. Wichtigste Ausgangsstoffe sind hierbei mehrfunktionelle Isocyanate. Als chemische Strukturen, die aus diesen Polyisocyanaten entstehen, können hierbei Polyrethane, Polyharnstoffe, Polyisocyanate und weitere Isocyanataddukte wie Allophanate, Biurete, Carbodiimide, Oxazolidone, Polyimide, Polyamide u.a. vorliegen. Dabei wird die Art dieser Strukturen durch die Reaktionspartner der Isocyanate, die Katalyse und die Reaktionsbedingungen gesteuert. Die größte technische Bedeutung haben hierbei die Hartschaumstoffe auf Isocyanatbasis, die durch Umsetzung von Polyisocyanaten mit Polyolen hergestellt werden. Die Herstellung von Polyurethanhartschaumstoffen wird beispielsweise im Kunststoffhandbuch, Band VII, Polyurethane, herausgegeben von G. Oertel, Carl-Hauser-Verlag München, Wien, 1993, beschrieben.

Die üblichen Hartschaumstoffe auf Isocyanatbasis besitzen überwiegend geschlossene Zellen, in denen sich Zellgase mit niedriger Wärmeleitfähigkeit befinden. In der Vergangenheit wurden dafür vorwiegend Fluorchlorkohlenwasserstoffe (FCKW) eingesetzt, beispielsweise Trichlorfluormethan, zumeist als R 11 bezeichnet. Die Bezeichnung R 11 soll im weiteren Text allgemein für Fluorchlorkohlenwasserstoffe verwendet werden.

Diese FCKW besitzen jedoch ein hohes Ozonschädigungspotential (ODP) und ein hohes Treibhauspotential (GWP). In den letzten Jahren wurden die FCKW daher durch Produkte mit einem ODP von Null und einem sehr niedrigen GWP abgelöst. Von den Treibmitteln, die nach der Reaktion im Schaum als Zellgase verbleiben und die ein EDP von Null und ein GWP von nahe Null haben, besitzen Kohlenwasserstoffe die größte Bedeutung. Diese Stoffe führen jedoch zu einer erhöhten Wärmeleitfähigkeit der Schaumstoffe.

Aus dem Stand der Technik ist eine Reihe von Möglichkeiten zur Absenkung der Wärmeleitfähigkeit bekannt.

So wird in WO 95/15356 ein Verfahren zur Herstellung von Polyurethan-Hartschaumstoffen beschrieben, der geschlossene, sehr kleine Zellen aufwies und zur Verringerung der Wärmeleitfähigkeit IR-Absorber, insbesondere Ruß, enthielt. Nachteilig an der Verwendung derartiger Feststoffe als IR-Absorber ist insbesondere, daß sie die Verarbeitung der Polyol- und der Isocyanatkomponente zum Polyrethan beeinträchtigen, beispielsweise durch Absetzen oder durch das Verstopfen von Filtern.

In GB-A-2 286 134 wird vorgeschlagen, Polyurethan-Hartschaumstoff mit IR-absorbierenden Zwischenschichten zu versehen. Das Einlegen der Schichten erfordert jedoch erhöhten Aufwand, und das bei der Wärmeisolierung mittels Polyurethanen übliche einfache Ausfüllen von Hohlräumen ist nach diesem Verfahren nicht möglich.

Eine weitere Möglichkeit diesen Nachteil zu beheben, liegt darin, die Zellen des Schaumstoffes zu evakuieren und damit die Treibgase zu entfernen. Diese Möglichkeit wird beispielsweise erwähnt im R. De Vos, D. Dosbotham und J. Dechaght, 1994, SPI "Polyurethanes World Congress", Boston, W. Wacher, A. Christfreund, D. Randall, N.W. Keane, 1996, SPI "Polryrethanes Expo '96", Las Vegas. Die Wirkung von Vakuum in Verbindung mit feinporigen Strukturen als stark wärmedämmend ist allgemein bekannt und ist auch theoretisch umfassend behandelt worden, beispielsweise im VDI-Wärmeatlas, 6. Auflage, 1991, KF 1 - KF 19 "Superisolationen". Aus dieser Theorie geht hervor, daß die Strukturen möglichst feinporig sein müssen, damit die Anforderungen an das Vakuum möglichst gering sind.

In WO 95/00580 werden mikrozelluläre offenzellige Polyurethane beansprucht, die insbesondere als Kern für Vakuumisolationselemente eingesetzt werden. Die dort beschriebenen Stoffe werden in Lösung beziehungsweise durch Ausflocken eines NCO-terminierten Prepolymers in Wasser hergestellt. Diese Herstellungsweise bedeutet gegenüber der herkömmlichen Verschäumung einen erheblich höheren technischen Aufwand.

DE-A-44 39 328 beschreibt Vakuumpaneele mit einem Kern aus Polyurethan-Flocken, die mit einem Bindemittel verpreßt wurden. Nachteilig hierbei ist der erhöhte Aufwand zur Herstellung der Formkörper und deren hohe Dichte von zumeist über 100 kg/$m^3$.

US-A-5 478 867 beschreibt die Herstellung von Vakuum-Paneelen, die als Kern Polyharnstoff-Xerogele enthalten. Die Herstellung dieser Xerogele ist jedoch sehr zeitraubend und kostenaufwendig.

In EP-A-662 494 werden offenzellige Polyurethanhartschäume für den Einsatz in Vakuum-Paneelen beschrieben, die als Zellöffner mit Isocyanat reaktive Harnstoffverbindungen enthalten. Diese Harnstoffderivate bewirken jedoch um eine unzureichende Zellöffnung, sodaß diese Schäume nur bedingt für Vakuum-Paneele geeignet sind.

EP-A-188 806 beschreibt Polryrethan-Hartschaumstoffe für VakuumPaneele, die unter Verwendung von pulverförmigen Carboxylaten zweiwertiger Metalle hergestellt wurden. Der Einsatz dieser Feststoffe in den flüssigen Polyurethan-Aufbaukomponenten führt jedoch zu den oben geschilderten Problemen bei der Verarbeitung.

US-4 444 821 beschreibt Vakuum-Paneele, die als Kern Glasfasern enthalten. EP-A-434 225 und US-A-4 726 974 beschreiben VakuumPaneele mit Silica-Füllstoff. Auch bei diesen Varianten kommen die Vorteile der Anwendung von Polyurethanen nicht zum Tragen.

Der Erfindung lag die Aufgabe zu Grunde, offenzellige, feinzellige Hartschaumstoffe auf Isocyanatbasis bereitzustellen, die als Kernmaterial für Vakuumpaneele geeignet sind.

Die Aufgabe konnte gelöst werden durch die Umsetzung von Polyisocyanaten mit reaktive Wasserstoffatome enthaltenden Verbindungen der allgemeinen Formel I

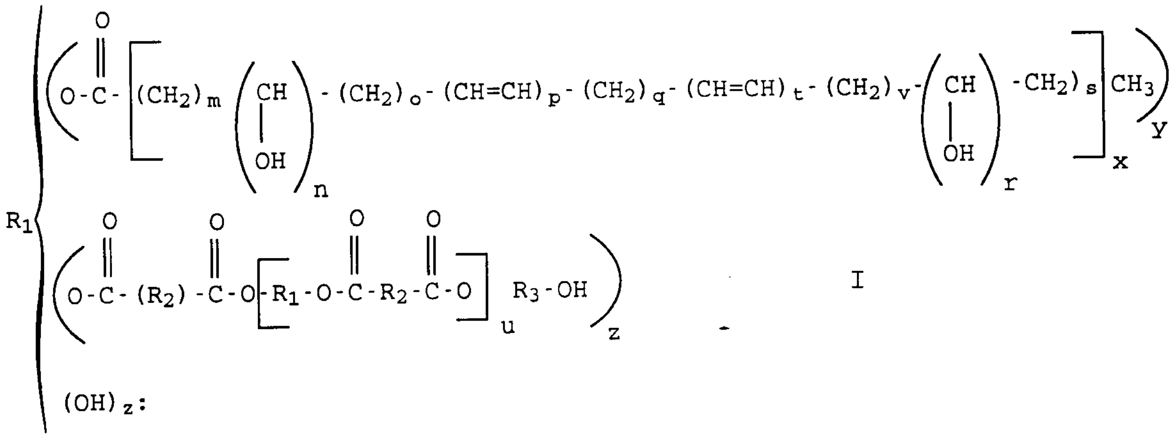

I

mit m von 0 - 15
n von 0 - 1
o von 0 - 15
p von 0 - 1
q von 0 - 15
r von 0 - 1
s von 0 - 15
t von 0 - 1
u von 0 - 10
v von 0 - 15
x von 1 - 5
y von 1 - 4 bzw. Mischungen zwischen 1 - 3 mit $r + n \neq 0$
z von 0 - 3
$z_i$ von 0,1 -3

$R_1$ eine aliphatische Struktur ohne OH-Gruppen, basierend auf der Struktur mehrwertiger Alkohole, vorzugsweise Ethylenglykol, Diethylenglykol, Triethylenglykol, 1,2-Propylenglykol und Dipropylenglykol, 1,4-Butandiol, 1,6-Hexandiol, Neopentylglykol, 1,3-Butandiol, Trimethylolpropan, Trimethylolethan, Glycerin, Pentaerythrit, wobei diese Stoffe auch im beliebigen Gemisch untereinander beim Verestern eingesetzt werden können und $R_1$ damit auch ein Gemisch der entsprechenden Strukturen bedeuten kann.

$R_2$ den Rest einer Polycarbonsäure ohne COOH-Gruppen, z.B. Adipinsäure, Terephthalsäure, o-Phthalsäure,

$R_3$ einen Alkoholrest wie $R_1$,

bedeuten.

Gegenstand der Erfindung ist demzufolge ein Verfahren zur Herstellung von offenzelligen Hartschaumstoffen auf Isocyanatbasis, geeignet für den Einsatz als Kernmaterial von Vakuum-Isolationseinheiten durch Umsetzung von

a) Polyisocyanaten mit

b) gegenüber Isocyanaten reaktivem Wasserstoffatome aufweisenden Verbindungen in Gegenwart von

c) Wasser,

d) gegebenenfalls als physikalische Blähmittel wirkende organische Verbindungen dadurch gekennzeichnet, daß

e) Katalysatoren, Hilfs- und Zusatzstoffe

als reaktive Wasserstoffatome aufweisende Verbindungen Stoffe mit folgender Struktur eingesetzt werden:

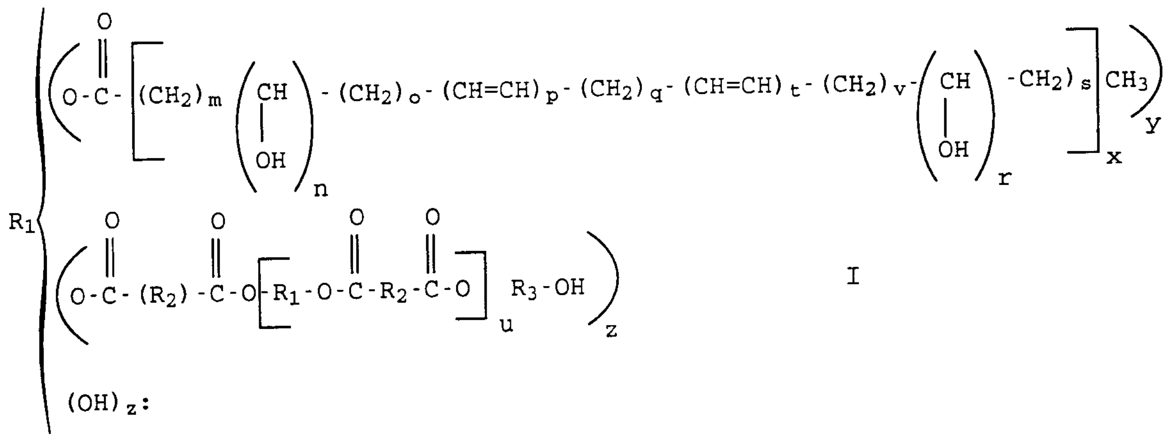

I

mit m von 0 - 15
n von 0 - 1
o von 0 - 15
p von 0 - 1
q von 0 - 15
r von 0 - 1
s von 0 - 15
t von 0 - 1
u von 0 - 10
v von 0 - 15
x von 1 - 5
y von 1 - 4 bzw. Mischungen zwischen 1 - 3 mit $r + n \neq 0$
z von 0 - 3
$z_i$ von 0,1 -3

$R_1$ eine aliphatische Struktur ohne OH-Gruppen, basierend auf der Struktur mehrwertiger Alkohole, vorzugsweise Ethylenglykol, Diethylenglykol, Triethylenglykol, 1,2-Propylenglykol und Dipropylenglykol, 1,4-Butandiol, 1,6-Hexandiol, Neopentylglykol, 1,3-Butandiol, Trimethylolpropan, Trimethylolethan, Glycerin, Pentaerythrit, wobei diese Stoffe auch im beliebigen Gemisch untereinander beim Verestern eingesetzt werden können und $R_1$ damit auch ein Gemisch der entsprechenden Strukturen bedeuten kann.

$R_2$ den Rest einer Polycarbonsäure ohne COOH-Gruppen, z.B. Adipinsäure, Terephthalsäure, o-Phthalsäure,

$R_3$ einen Alkoholrest wie $R_1$,

bedeuten.

Gegenstand der Erfindung sind weiterhin die nach diesem Verfahren hergestellten offenzelligen, feinzelligen Hartschaumstoffe auf Isocyanatbasis sowie die daraus hergestellten Vakuum-Paneele.

Die erfindungsgemäß eingesetzten reaktive Wasserstoffatome aufweisenden Verbindungen gemäß Formel I sind vorzugsweise Hydroxylgruppen aufweisende Veresterungsprodukte aus Fettsäuren und mehrfunktionellen Alkoholen. Hierbei können sowohl gesättigte als auch ungesättigte Säuren verwendet werden, wobei bevorzugt ungesättigte Verbindungen eingesetzt werden. Aufgrund der guten Verträglichkeit mit den übrigen Polyurethan-Aufbaukomponenten werden vorzugsweise Umsetzungsprodukte der Ricinolsäure und/oder des Rizinusöls und/oder der Tallölfettsäure mit mehrfunktionellen Alkoholen eingesetzt. Als mehrfunktionelle Alkohle werden insbesondere solche mit 2 bis 6 Kohlenstoffatomen, vorzugsweise 3 bis 6 Kohlenstoffatomen und besonders bevorzugt 3 bis 5 Kohlenstoffatomen verwendet. Beispiele sind Ethylenglykol, Propylenglykol, Diethylenglykol, Dipropylenglykol, Glycerin, Butandiol. Die Hydroxylzahl der aktiven Wasserstoff aufweisenden Verbindungen gemäß Formel I ist vorzugsweise > 160 mg KOH/g.

Die erfindungsgemäß verwendeten reaktive Wasserstoffatome enthaltenden Verbindungen werden insbesondere in einer Menge von 0,1 bis 80 Gew.-%, vorzugsweise 5 bis 50 Gew.-% und besonders bevorzugt 10 - 20 Gew.-%, bezogen auf die Gesamtmenge der Komponenten b) bis e), eingesetzt.

Zu den übrigen Aufbaukomponenten ist im einzelnen folgendes zu sagen:

a) Als organische Polyisocyanate kommen die an sich bekannten aliphatischen, cycloaliphatischen, araliphatischen und vorzugsweise aromatischen mehrwertigen Isocyanate in Frage.
Besonders bevorzugt sind 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,4'-Diphenylmethandiisocyanaten, Polyphenyl-polymethylen-polyisocyanate, Mischungen aus 4,4'-, 2,4'- und 2,2'-Diphenylmethan und Polyphenyl-polymethylen-polyisocyanaten ("Roh-MDI"), sowie Mischungen aus Roh-MDI und Toluylendiisocyanaten.
Häufig werden auch sogenannte modifizierte mehrwertige Isocyanate, d.h. Produkte, die durch chemische Umsetzung organischer Di- und/oder Polyisocyanate erhalten werden, verwendet.
Beispielhaft genannt seien Ester-, Harnstoff-, Biuret-, Allophanat-, Carbodiimid-, Isocyanurat-, Uretdion- und/oder Urethangruppen enthaltende Polyisocyanate. Die modifizierten Polyisocyanate können miteinander oder mit unmodifizierten Polyisocyanaten gemischt werden.
Besonders bewährt haben sich Diphenylmethan-diisocyanat-Isomerengemische oder Roh-MDI mit einem Diphenylmethandiisocyanatisomerengehalt von 33 bis 55 Gew.-%.

b) Als Verbindungen mit mindestens zwei gegenüber Isocyanaten reaktiven Wasserstoffatomen, die gemeinsam mit den erfindungsgemäß verwendeten aktiven Wasserstoff aufweisenden Verbindungen gemäß Formel I eingesetzt werden können, kommen Verbindungen in Frage, die zwei oder mehrere reaktive Gruppen, ausgewählt aus OH-Gruppen, SH-Gruppen, NH-Gruppen $NH_2$-Gruppen und CH-aciden Gruppen, wie z.B. β-Diketo-Gruppen, im Molekül tragen.
Zweckmäßigerweise werden solche mit einer Funktionalität von 2 bis 8, vorzugsweise 2 bis 6, und einem Molekulargewicht von 300 bis 8000, vorzugsweise von 400 bis 4000 verwendet. Bewährt haben sich z.B. Polyether-polyamine und/oder vorzugsweise Polyole, ausgewählt aus der Gruppe der Polyetherpolyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Die Hydroxylzahl der Polyhydroxylverbindungen beträgt dabei in aller Regel 100 bis 850 und vorzugsweise 200 bis 600.
Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan.
Zur Herstellung der Polyester-polyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden.
Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
Die erhaltenen Polyester-polyole besitzen vorzugsweise eine Funktionalität von 2 bis 4, insbesondere 2 bis 3, und ein Molekulargewicht von 300 bis 3000, vorzugsweise 350 bis 2000 und insbesondere 400 bis 600.
Insbesondere als Polyole verwendet werden jedoch Polyetherpolyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei-, dreiwertige und/oder höherwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, und Saccharose.

Die Polyether-polyole, vorzugsweise Polyoxypropylen- und Polyoxypropylen-polyoxyethylen-polyole, besitzen eine Funktionalität von vorzugsweise 2 bis 6 und insbesondere 2 bis 4 und Molekulargewichte von 300 bis 8000, vorzugsweise 400 bis 1500 und insbesondere 420 bis 1100 und geeignete Polyoxytetramethylen-glykole ein Molekulargewicht bis ungefähr 3500.

Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.

Die Polyether-polyole können ebenso wie die Polyester-polyole einzeln oder in Form von Mischungen verwendet werden. Ferner können sie mit den Pfropf-polyether-polyolen oder Polyesterpolyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylen-polyolen mit Aminen oder Ammoniak in Gegenwart von Wasserstoff und Katalysatoren (DE 12 15 373).

Die offenzelligen Polyurethan-Hartschäume können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/ oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare

hydroxylgruppenhaltige Polyalkylenoxide auf Basis Ethylen- und/oder 1,2-Propylenoxid und den vorgenannten Diolen und/oder Triolen als Startermoleküle.
Sofern zur Herstellung der Hartschaumstoffe auf Isocyanatbasis Kettenverlängerungsmittel, Vernetzungsmittel oder Mischungen davon Anwendung finden, kommen diese zweckmäßigerweise in einer Menge bis 20 Gew.-%, vorzugsweise von 2 bis 8 Gew.-%, bezogen auf das Gewicht der Polyolverbindung (b), zum Einsatz.

c) Als Treibmittel wird vorzugsweise Wasser eingesetzt, welches durch die Reaktion mit den Isocyanatgruppe Kohlendioxid abspaltet. Der Wassergehalt beträgt insbesondere 0,1 bis 4, vorzugsweise 0,3 bis 3, insbesondere 0,5 bis 2 Gew.-%, bezogen auf die Gesamtmasse aller wasserstoffaktiven Verbindungen. Ein zu hoher Wassergehalt kann zu einer erhöhten Sprödigkeit und Wärmeleitfähigkeit des Schaumes führen.

d) Zusätzlich zu Wasser können auch physikalisch wirkende Blähmittel d) eingesetzt werden. Insbesondere werden niedrigsiedende Kohlenwasserstoffe, niedere monofunktionelle Alkohole, Acetale oder auch teilhalogenierte Kohlenwasserstoffe, sogenannte HFCKW, eingesetzt. Bevorzugt sind niedrigsiedende cyclische und acyclische gesättigte Kohlenwasserstoffe mit bis zu 12 Kohlenstoffatomen, die einzeln oder in beliebigen Mischungen miteinander eingesetzt werden können, insbesondere Pentane, wobei sowohl Gemische der Pentanisomeren als auch die reinen Isomeren eingesetzt werden können. Die Menge der Kohlenwasserstoffe liegt bei 1 bis 30 Gew. -Teilen, vorzugsweise 16 bis 22 Gew.-Teile, insbesondere 6 bis 12 Gew.-Teile, bezogen auf das Gewicht aller wasserstoffaktiven Verbindungen.
Weiterhin ist es vorteilhaft, als Co-Treibmittel Perfluorverbindungen einzusetzen. Insbesondere verwendet werden Perfluoralkane, vorzugsweise n-Perfluorpentan, Perfluorhexan, n-Perfluorheptan, n-Perfluoroctan. Die Perfluorverbindungen können einzeln oder in Form von Mischungen verwendet werden. Vorzugsweise erfolgt der Einsatz in einer Menge von 0,1 bis 6 Gewichtsteilen, bezogen auf die Summe der Komponenten b) bis e).
Da die Perfluorverbindungen in der Polyolkomponente unlöslich sind, werden sie zumeist in dieser Komponente emulgiert. Als Emulgatoren werden vorzugsweise (Meth)-acrylate eingesetzt, wobei insbesondere solche mit Fluor enthaltenden Seitenketten zur Anwendung kommen, beispielsweise fluorierte Alkylester.

e) Als Katalysatoren zur Herstellung der erfindungsgemäßen Schaumstoffe kommen insbesondere solche Verbindungen zur Anwendung, die die Reaktion der reaktiven Wasserstoffatome enthaltenden Verbindungen (b) mit den Polyisocyanaten (a) stark beschleunigen. Bevorzugt hierfür sind tertiäre Amine, Zinn- und Bismutverbindungen, Alkali- und Erdalkalicarboxylate, quarternäre Ammoniumsalze, s-Hydroxytriazine und Tris- (dialkylaminomethyl)-phenole.
Besonders bevorzugt sind tertiäre Aminoalkohole der allgemeinen Formel

$$R_1R_2NR_3OH,$$

wobei $R_1$ und $R_2$ aliphatische oder cycloaliphatische Gruppen mit 1 bis 15 Kohlenstoffatomen oder $R_1$ und $R_2$ zusammen einen einzigen cycloaliphatischen Ring mit 3 bis 15 Kohlenstoffatomen und dem Stickstoffatom im Ring bilden und $R_3$ eine aliphatische Kette mit 1 bis 15 Kohlenstoffatomen bedeuten.
Die Kohlenstoffketten bzw. -Ringe von $R_1$, $R_2$ und $R_3$ können auch Heteroatome, wie Schwefel oder insbesondere Sauerstoffatome in der Kette enthalten.

Vorzugsweise bilden $R_1$ und $R_2$ unter Einschluß des Stickstoffatoms eine Piperidin-, Pyrrolidin-, Imidazol-, Morpholinstruktur, ein Alkaloid vom Pyrrolidin-Piperidin-Typ oder eine bicyclische Verbindung, z.B. ein Azanorbornan.
Beispielhaft sei genannt die Verbindung

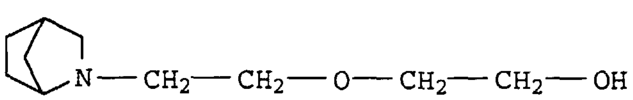 ,

wie sie von der Firma Air Products vertrieben wird.
Zur Herstellung von Isocyanuratsturkturen im Schaumstoff benutzt man die dafür üblichen Katalysatoren wie Metallcarboxylate, beispielsweise Kaliumacetat, und andere Stoffe, wie sie beispielsweise im Kunststoff -Handbuch, Bd. VII, Polyurethane, 3. Auflage 1993, auf Seite 108, beschrieben sind.
Die Katalysatoren werden vorzugsweise in einer Menge von 0,1 bis 10 Gewichtsteilen bezogen auf 100

Gewichtsteile der Verbindungen b), c), d) und e).

Weitere Hilfs- und Zusatzstoffe sind beispielsweise oberflächenaktive Substanzen, Schaumstabilisatoren, Zellregler, Flammschutzmittel, Füllstoffe und Hydrolyseschutzmittel.

Nähere Angaben über oben genannte und weitere Ausgangsstoffe sind der Fachliteratur, beispielsweise der Monographie von H.J. Saunders und K.C. Frisch, "High Polymers", Band XVI, Polyurethanes Teil 1 und 2, Verlag Interscience Publishers 1962 bzw. 1964 oder dem Kunststoffhandbuch, Band VII, Polyurethane, Carl Hanser Verlag München, Wien, 1., 2. und 3. Auflage 1966, 1983 und 1993 zu entnehmen.

Zur Herstellung der erfindungsgemäßen Hartschaumstoffe auf Isocyanatbasis werden die Polyisocyanate mit den gegenüber Isocyanaten reaktive Wasserstoffatome aufweisenden Verbindungen und gegebenenfalls teilweise mit sich selbst zur Reaktion gebracht. Dabei werden üblicherweise die Komponenten b) bis e) vor der Umsetzung zu der sogenannten Polyolkomponente vereinigt.

Die Vereinigung der Polyolkomponente mit dem Polyisocyanat kann im einfachsten Fall durch Rühren erfolgen. Es ist jedoch üblich, die Verschäumung maschinell durchzuführen. Dabei werden die Komponenten in Mischköpfen vereinigt und danach in eine Form eingebracht.

Die erfindungsgemäßen Schaumstoffe weisen zumeist eine Offenzelligkeit von 50 - 100 % auf. Ihre Dichte beträgt vorzugsweise 30 bis 100 $kg/m^3$, insbesondere 50 bis 65 $kg/m^3$. Die erfindungsgemäßen Schaumstoffe werden vorzugsweise zum Ausfüllen von Hohlräumen verwendet, die anschließend evakuiert werden, wie Wände und/oder Türen von Kühlschränken, Speichern, LKW-Aufbauten, Fernwärmerohren oder Sandwich-Elementen, insbesondere als Kernmaterial für Vakuum-Isolationseinheiten.

Dazu werden die Schaumstoffkerne mit einer Folie dicht umschlossen und danach evakuiert. Als Folie wird dabei vorzugsweise eine Mehrschichtfolie verwendet.

Der Verschluß der Folie erfolgt zumeist durch Verschweißen, wobei die Schweißnaht, ebenso wie die gesamte Folie, permeationsdicht verschlossen sein muß.

Der Druck innerhalb der Vakuumisolationselemente liegt zumeist zwischen 0,001 und 10 mbar. Um letzte Spuren von Gasen zu binden, ist es vorteilhaft, an sich bekannte Gettersubstanzen zu verwenden.

Nach dem erfindungsgemäßen Verfahren ist es möglich, Polyurethan-Hartschaumstoffe mit einer Offenzelligkeit von bis zu 100 % herzustellen. Die aus dem erfindungsgemäß hergestellten Hartschaumstoffen gefertigten Vakuumisolationselemente besitzen gute mechanische Eigenschaften sowie eine gegenüber Produkten des Standes der Technik deutlich niedrigere Wärmeleitfähigkeit.

Die Erfindung soll an nachstehenden Beispielen näher erläutert werden.

Beispiele 1 bis 13

Verwendete Aufbaukomponente:

| | |
|---|---|
| Polyol 1: | Polyetherpolyol mit einer Hydroxylzahl von 470 mg KOH/g, einem Molekulargewicht von 470 und einer Funktionalität von 3,9, hergestellt durch Umsetzung von Ethylendiamin mit Propylenoxid. |
| Polyol 2: | Polyetherpolyol mit einer Hydroxylzahl von 490 mg KOH/g, einem Molekulargewicht von 490 und einer Funktionalität von 4,3, hergestellt durch Umsetzung einer Mischung von Saccarose, Glycerol und Wasser mit Propylenoxid. |
| Polyol 3: | Polyetherpolyol mit einer Hydroxylzahl von 555 mg KOH/g, einem Molekulargewicht von 1800 und einer Funktionalität von 3,0, hergestellt durch Umsetzung von Trimethylolpropan mit Propylenoxid. |
| Polyol 4: | Polyesterol aus Glycerol und Rizinusöl mit einer Hydroxylzahl von 500 mg KOH/g. |
| Polyol 5: | Polyesterol aus Monoethylenglykol und Tallölfettsäure mit einer Hydroxylzahl von 161 mg KOH/g. |
| Polyol 6: | Polyesterol aus Trimethylolpropan und Tallölfettsäure mit einer Hydroxylzahl von 293 mg KOH/g. |
| Polyol 7: | Polyesterol aus Glycerol und Tallölfettsäure mit einer Hydroxylzahl von 310 mg KOH/g. |
| Polyol 8: | Polyesterol aus Glycerol und Rizinusöl mit einer Hydroxylzahl von 357 mg KOH/g. |
| Polyol 9: | Polyesterol aus Adipinsäure/Phthalsäureanhydrid/Ölsäure/Trimethylolpropan mit einer Hydroxyl- |

| | |
|---|---|
| | zahl von 385 mg KOH/g und einem Molekulargewicht von 530. |
| Polyol 10: | Polyetherpolyol mit einer Hydroxylzahl von 35 mg KOH/g, einem Molekulargewicht von 3980 und einer Funktionalität von 2,5, hergestellt durch Umsetzung von Glyerol und Ethylenoxid und Propylenoxid. |
| Polyol 11: | Polyetherpolyol mit einer Hydroxylzahl 400 mg KOH/g, einem Molekulargewicht von 420 und einer Funktionalität von 3,0, hergestellt durch Umsetzung von Glycerol mit Propylenoxid. |
| Lupranat M 20 A: | Gemisch aus Diphenylmethandiisocyanaten und Polyphenylenpolymethylenpolyisocyanaten mit einem NCO-Gehalt von 31,5 Gew.-%. |
| Lupranat M 50: | Gemisch aus Diphenylmethandiisocyanaten und Polyphenylenpolymethylenpolyisocyanaten mit einem NCO-Gehalt von 31,0 Gew.-%. |
| Tegostab B8919: | Zellöffner (Firma Goldschmidt) |
| Ortegol 501: | Zellöffner (Firma Goldschmidt) |
| Tegostab B8863Z: | Schaumstabilisator (Firma Goldschmidt) |
| Tegostab B8870: | Schaumstabilisator (Firma Goldschmidt) |
| Tegostab B8461: | Schaumstabilisator (Firma Goldschmidt) |
| Tegostab B8409: | Schaumstabilisator (Firma Goldschmidt) |
| FC 430: | fluorierter Alkylester (Firma 3 M Deutschland GmbH) |
| Dabco AN 20: | Katalysator (Firma Air Products) |
| Lupragen N 301: | Katalysator (Firma BASF AG) |
| Lupragen VP 9104: | Katalysator (Firma BASF AG) |
| UAX 6164: | Zellöffner (Firma OSI) |

Die in den Tabellen 1 - 4 angegebenen Polyol- und Isocyanatkomponenten wurden vermischt und in offenen Formen von 400 x 700 x 90 mm frei aufschäumen gelassen.

Aus den Schaumstoffblöcken wurden Prüfkörper mit den Abmaßen 190/190/20 mm ausgesägt, in eine gasdichte Folie verpackt und diese nach dem Evakuieren bis zu Enddrucken von 0,05 mbar verschweißt.

In einem Gerät vom Typ "Hesto-Lambda-Control-A-50" wurde die Wärmeleitfähigkeit ermittelt.

Die Bestimmung der Offenzelligkeit erfolgte gemäß ASTM D 2856-87, Verfahren B.

Tabelle 1

| Polyolkomponente | Beispiel 1 (V) | Beispiel 2 | Beispiel 3 |
|---|---|---|---|
| Polyol 1 | 20 | 20 | 20 |
| Polyol 2 | 30 | 20 | 40 |
| Polyol 3 | 50 | 50 | 30 |
| Polyol 4 | | 10 | 10 |
| B8919 | 3 | 3 | 3 |
| B8863Z | 1 | 1 | 1 |
| FC 430 | 1 | | 1 |
| Dabco AN 20 | 5 | 5 | 5 |
| Wasser | 0,5 | 2,3 | 0,5 |
| Cyclopentan | 7 | | 7 |
| Perfluorhexan | 4 | | 4 |
| Polyisocyanat-Komponente | | | |
| M 20 A | 144 | 145 | 147 |
| Dichte (g/l) | 55,3 | 54,7 | 55,0 |
| Offenzelligkeit (%) | 83 | 100 | 100 |
| WLF (mW/mK) bei 0,1 mbar | 13 | 7,5 | 7,0 |

(V) = Vergleichsbeispiel

Die angegebenen Mengen sind Gewichtsteile

Tabelle 2

| Polyolkomponente | Beispiel 4 | Beispiel 5 | Beispiel 6 | Beispiel 7 |
|---|---|---|---|---|
| Polyol 1 | 15 | 15 | 15 | 10 |
| Polyol 2 | 17,5 | 22,5 | 20 | 10 |
| Polyol 3 | 41 | 36 | 40 | 43 |
| Polyol 7 | 5 | | | 14 |
| Polyol 5 | | | 5 | |
| Polyol 6 | | | | |
| | | | | |
| B 8919 | 3 | 3 | 3 | 4,5 |
| B 8863 Z | 1 | 1 | 1 | 1,4 |
| FC 430 | 1 | 1 | 1 | |
| Dabco AN 20 | 5 | 5 | 5 | 2,8 |
| Wasser | 0,5 | 0,5 | 0,5 | 2,2 |
| Cyclopentan | 7 | 7 | 7 | |
| Perfluorhexan | 4 | 4 | 4 | |
| PolyisocyanatKomponente | | | | |
| M 20 A | 117 | 116 | 149 | 180 |
| Dichte (g/l) | 55 | 52 | 53 | 55 |
| Offenzelligkeit (%) | 95 | 71 | 73 | 96 |
| WLF (mW/m*K) | 7,5 | 14 | 13 | 6,9 |

Tabelle 3

| Polyolkomponente | Beispiel 8 | Beispiel 9 | Beispiel 10 | Beispiel 11 |
|---|---|---|---|---|
| Polyol 1 | 10 | 10 | 10 | 10 |
| Polyol 2 | 10 | 10 | 10 | 10 |
| Polyol 3 | 43 | 43 | 43 | 43 |
| Polyol 8 | 12 | 12 | 12 | 12 |
| Polyol 11 | 20 | 20 | 20 | 20 |
| Ortegol 501 | | 3,6 | 3,6 | |
| B 8919 | 3,6 | | | 3,6 |
| B 8870 | 1 | 0,8 | | 1,4 |
| B 8863 Z | | | 1,4 | |
| Dabco AN 20 | 3 | 3 | 3 | 3 |
| Wasser | 2,5 | 2,3 | 2,3 | 2,3 |
| | | | | |
| Polyisocyanat-Komponente | | | | |
| M 20 A | 190 | 190 | 190 | 190 |
| Dichte (g/l) | 59 | 58 | 59 | 60 |
| Offenzelligkeit (%) | 96 | 96 | 95 | 96 |
| WLF (mW/m*K) | 7,8 | 7,5 | 8,1 | 7,3 |

Tabelle 4

| Polyolkomponente | Beispiel 12 | Beispiel 13 |
|---|---|---|
| Polyol 9 | 26 | 26 |
| Polyol 10 | 32 | 32 |
| Dipropylenglykol | 17 | 17 |
| B 8461 | 1,3 | 1,3 |
| B 8409 | 1,3 | 1,3 |
| B 8919 | 2 | |
| UAX 6164 | | 2 |
| Wasser | 0,4 | 0,4 |
| Lupragen VP 9104 | 5,1 | 5,1 |
| Lupragen N 301 | 0,3 | 0,3 |
| Cyclopentan | 18 | 18 |
| Polyisocyanat-Komponente | | |
| M 50 A | 320 | 320 |
| Dichte (g/l) | 64 | 61 |
| Offenzelligkeit (%) | 95,6 | 92,4 |
| WLF (mW/m*K) | 6,9 | 8,1 |

**Patentansprüche**

**1.** Verfahren zur Herstellung von offenzelligen Hartschaumstoffen durch Umsetzung von

a) Polyisocyanaten mit

b) gegenüber Isocyanaten reaktive Wasserstoffatome aufweisenden Verbindungen in Gegenwart von

c) Wasser,

d) gegebenenfalls als physikalische Blähmittel wirkende organische Verbindungen,

e) Katalysatoren, Hilfs- und/oder Zusatzstoffen,

dadurch gekennzeichnet, daß als reaktive Wasserstoffatome aufweisende Verbindungen Stoffe mit der Struktur I eingesetzt werden:

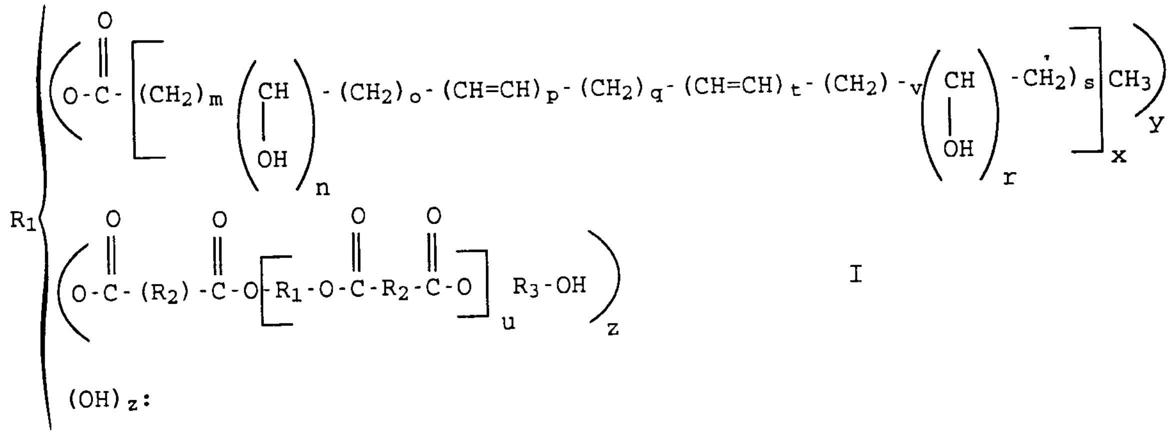

I

mit m von 0 - 15
n von 0 - 1
o von 0 - 15
p von 0 - 1
q von 0 - 15
r von 0 - 1
s von 0 - 15
t von 0 - 1
u von 0 - 10
v von 0 - 15
x von 1 - 5
y von 1 - 4 bzw. Mischungen zwischen 1 - 3 mit $r + n \neq 0$
z von 0 - 3
$z_i$ von 0,1 -3

$R_1$ eine aliphatische Struktur ohne OH-Gruppen, basierend auf der Struktur mehrwertiger Alkohole, vorzugsweise Ethylenglykol, Diethylenglykol, Triethylenglykol, 1,2-Propylenglykol und Dipropylenglykol, 1,4-Butandiol, 1,6-Hexandiol, Neopentylglykol, 1,3-Butandiol, Trimethylolpropan, Trimethylolethan, Glycerin, Pentaerythrit, wobei diese Stoffe auch im beliebigen Gemisch untereinander beim Verestern eingesetzt werden können und $R_1$ damit auch ein Gemisch der entsprechenden Strukturen bedeuten kann.

$R_2$ den Rest einer Polycarbonsäure ohne COOH-Gruppen, z.B. Adipinsäure, Terephthalsäure, o-Phthalsäure,

$R_3$ einen Alkoholrest wie $R_1$.

2. Verfahren nach Anspruch 1, dadurch gekennzeichnet, daß die reaktive Wasserstoffatome aufweisenden Verbindungen mit der Struktur I Veresterungsprodukte aus Naturstoffen und mehrfunktionellen Alkoholen sind.

3. Verfahren nach Anspruch 1 oder 2, dadurch gekennzeichnet, daß die reaktive Wasserstoffatome enthaltenden Verbindungen mit der Struktur I 0,1 - 80 Gew.-% der gesamten mit Isocyanat reaktiven Verbindungen b) betragen.

4. Verfahren nach einem der Ansprüche 1 bis 3, dadurch gekennzeichnet, daß die reaktive Wasserstoffatome enthaltenden Verbindungen mit der Struktur I 5 - 50 Gew.-% der gesamten mit Isocyanat reaktiven Verbindungen b) betragen.

5. Verfahren nach einem der Ansprüche 1 bis 4, dadurch gekennzeichnet, daß die reaktive Wasserstoffatome enthaltenden Verbindungen mit der Struktur I 10 - 20 Gew.-% der gesamten mit Isocyanat reaktiven Verbindungen b) betragen.

6. Verfahren nach einem der Ansprüche 1 bis 5, dadurch gekennzeichnet, daß die gegenüber Isocyanaten reaktive Wasserstoffatome aufweisenden Verbindungen Gemische aus Verbindungen der Struktur I mit Polyolen der Funktionalität größer 1,5 und einer Hydroxylzahl von 10 mg KOH/g bis 600 mg KOH/g sind.

7. Verfahren nach einem der Ansprüche 1 bis 6, dadurch gekennzeichnet, daß die gegenüber Isocyanaten reaktive Wasserstoffatome aufweisenden Verbindungen Gemische aus Verbindungen der Struktur I und Umsetzungsprodukten aus Trimethylolpropan und Alkylenoxiden sind.

8. Verfahren nach einem der Ansprüche 1 bis 7, dadurch gekennzeichnet, daß mindestens 10 % der Isocyanatgruppen der Polyisocyanate a) zu Isocyanuratgruppen umgesetzt werden.

9. Verfahren nach einem der Ansprüche 1 bis 8, dadurch gekennzeichnet, daß als physikalische Blähmittel Alkane eingesetzt werden.

10. Verfahren nach einem der Ansprüche 1 bis 8, dadurch gekennzeichnet, daß als physikalische Blähmittel Perfluorverbindungen eingesetzt werden.

11. Verfahren nach Anspruch 10, dadurch gekennzeichnet, daß die Perfluorverbindungen in einer Menge von 0,1 bis 6 Gew.-Teilen, bezogen auf 100 Gewichtsteile der Komponenten b) bis e), eingesetzt werden.

12. Verfahren nach einem der Ansprüche 1 bis 11, dadurch gekennzeichnet, daß als physikalische Blähmittelgemische aus Alkanen und Perfluorverbindungen eingesetzt werden.

13. Offenzellige Hartschaumstoffe auf Isocyanatbasis, herstellbar nach einem der Ansprüche 1 bis 12.

14. Verwendung der Schaumstoffe nach Anspruch 13 als Kernmaterial für Vakuum-Isolationselemente.

Europäisches Patentamt

# EUROPÄISCHER RECHERCHENBERICHT

Nummer der Anmeldung
EP 98 11 8030

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 195 45 165 A (BASF AG) 5. Juni 1997<br>* Seite 5, Zeile 10 - Zeile 32; Ansprüche 1,8,9,11,12; Beispiele I,II *<br>--- | 1-7,13 | C08G18/36<br>C08G18/65<br>C08J9/08<br>C08J9/14<br>C08G18/79 |
| A | EP 0 610 714 A (BAYER AG) 17. August 1994<br>* Ansprüche 1,5,6,9,10; Beispiel 1 *<br>--- | 1-7,13, 14 | |
| A | EP 0 547 515 A (TAKEDA CHEMICAL INDUSTRIES, LTD.) 23. Juni 1993<br>* Seite 5; Ansprüche 1,2,8 *<br>--- | 1,6,7,13 | |
| A | US 5 260 344 A (K.ASHIDA ET AL.) 9. November 1993<br>* Spalte 10, Zeile 66 - Spalte 11, Zeile 1; Ansprüche 1,2,9,13,15 *<br>* Spalte 4, Zeile 57 - Zeile 63 *<br>--- | 1,7-9, 13,14 | |
| A | WO 96 36655 A (ICI PLC) 21. November 1996<br>* Seite 3, Zeile 30 - Seite 5, Zeile 30; Ansprüche 1,8,9,14,15 *<br>* Seite 6, Zeile 40 - Seite 7, Zeile 2 *<br>----- | 1,7, 10-14 | RECHERCHIERTE SACHGEBIETE (Int.Cl.6)<br>C08G<br>C08J |

Der vorliegende Recherchenbericht wurde für alle Patentansprüche erstellt

| Recherchenort | Abschlußdatum der Recherche | Prüfer |
|---|---|---|
| BERLIN | 16. Dezember 1998 | Angiolini, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)

## ANHANG ZUM EUROPÄISCHEN RECHERCHENBERICHT ÜBER DIE EUROPÄISCHE PATENTANMELDUNG NR.

EP 98 11 8030

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-12-1998

| Im Recherchenbericht angeführtes Patentdokument | Datum der Veröffentlichung | Mitglied(er) der Patentfamilie | Datum der Veröffentlichung |
|---|---|---|---|
| DE 19545165 A | 05-06-1997 | KEINE | |
| EP 610714 A | 17-08-1994 | DE 4303556 C | 27-10-1994 |
| | | CA 2114874 A | 09-08-1994 |
| | | JP 6256453 A | 13-09-1994 |
| EP 547515 A | 23-06-1993 | CN 1074226 A | 14-07-1993 |
| | | DE 69218138 D | 17-04-1997 |
| | | DE 69218138 T | 19-06-1997 |
| | | JP 7053655 A | 28-02-1995 |
| | | US 5457138 A | 10-10-1995 |
| US 5260344 A | 09-11-1993 | JP 6016859 A | 25-01-1994 |
| WO 9636655 A | 21-11-1996 | AU 5688796 A | 29-11-1996 |
| | | CA 2216739 A | 21-11-1996 |
| | | CN 1184492 A | 10-06-1998 |
| | | EP 0830404 A | 25-03-1998 |

EPO FORM P0461

Für nähere Einzelheiten zu diesem Anhang : siehe Amtsblatt des Europäischen Patentamts, Nr.12/82